Europäisches Patentamt

European Patent Office

Office européen des brevets

(11) Publication number: **0 046 002**
**B1**

(12) **EUROPEAN PATENT SPECIFICATION**

(45) Date of publication of patent specification: **28.11.84**

(21) Application number: **81300099.9**

(22) Date of filing: **09.01.81**

(51) Int. Cl.³: **B 60 R 13/04,** B 60 R 13/06

(54) **Decorative trim strip.**

(30) Priority: **08.08.80 JP 113220/80**
**20.10.80 JP 149484/80**

(43) Date of publication of application:
**17.02.82 Bulletin 82/07**

(45) Publication of the grant of the patent:
**28.11.84 Bulletin 84/48**

(84) Designated Contracting States:
**DE FR GB IT SE**

(56) References cited:
**GB-A- 960 588**
**GB-A-1 253 355**
**GB-A-1 276 842**
**US-A-3 625 789**
**US-A-3 934 385**
**US-A-3 952 383**

(73) Proprietor: **INOUE MTP KABUSHIKI KAISHA**
**92-5, 2-chome, Shimohiroi-cho Nakamura-ku**
**Nagoya-shi Aichi-ken (JP)**

(72) Inventor: **Kozuka, Masayoshi**
**63-3, Shishizuka Higashimachi**
**Anjyo-shi Aichi-ken (JP)**
Inventor: **Mizutani, Tomihiko**
**27-15, Hime Himeogawacho**
**Anjyo-shi Aichi-ken (JP)**
Inventor: **Narita, Kohji**
**144, Bohzuyama Narumicho Midori-ku**
**Nagoya-shi Aichi-ken (JP)**

(74) Representative: **Silverman, Warren et al**
**HASELTINE LAKE & CO. Hazlitt House 28**
**Southampton Buildings Chancery Lane**
**London WC2A 1AT (GB)**

Courier Press, Leamington Spa, England.

## Description

This invention relates to a decorative plastic trim strip and, in particular, but not exclusively, to a plastic trim strip for a vehicle such as an automobile, the strip being of multilayer construction and comprising, as a base layer, a reinforcing layer containing stainless steel plate or leaf and an intermediate plastics layer.

Various kinds of plastic trim strips are used to decorate furniture, for example, edges of the furniture. These trim strips are usually made of transparent plastics materials, such as cellulose acetate or polyvinyl chloride, in which is embedded or which adheres to a decorative material made of nonferrous metal leaf, such as aluminium foil. The decorative material may also be a decorative plastics film to which a metal, such as aluminium, has been applied and which is embedded in or applied to the transparent plastics material. A trim strip of this type is light, since the decorative material comprises a nonferrous metal, and, accordingly, they are particularly suitable for decorating furniture or the like. Furthermore, the nonferrous metal leaf serves to impart a surface lustre to the trim. However, when a decorative trim of such construction is used on an automobile such as a roof drip trim, a boot trim, or a window trim, it possesses insufficient rigidity.

For example, a roof drip trim for an automobile usually has a substantially C-shaped profile in the channel of which a channelled member of a roof of a vehicle body is fitted. However, when the roof drip trim is mounted to the vehicle body, the fit tends to loosen because of the low rigidity of the trim. In time the trim becomes displaced relative to the vehicle body or the trim easily comes out of the channelled member even when the trim is only subject to a small impact or shock.

It is therefore very important to increase the rigidity of such a decorative trim construction when used in automobile construction.

According to the present invention, there is provided a trim strip of channel form of the type comprising an outer surface layer formed of an inherently transparent or translucent thermoplastic plastics material having a surface lustre, a reinforcing layer of stainless steel plate or leaf at or adjacent the interior surface of the channel and an intermediate plastics layer adhering to both the surface layer and the reinforcing layer; a trim strip meeting this description is shown in US—A—3,934,385. The present invention is characterised in that the intermediate layer is formed of a rigid thermoplastic plastics material and is adhesively bonded to both the outer surface layer and the reinforcing layer at all positions where the respective layers are positioned one over an adjacent layer to produce a rigid interconnection between the reinforcing layer and the outer surface layer.

GB—A—960,588 shows an arrangement in which a metal foil is in intimate contact with an intermediate layer, but teaches that the latter should be flexible.

A trim embodying the present invention includes a reinforcing layer made of a plate or leaf of stainless steel. It is very difficult to adhere ferrous metal, such as steel or stainless stell, to transparent plastics materials, and, particularly, to cellulosic plastics materials which are usually used to make decorative trim for automobiles. Therefore, consideration has had to be directed also to the problem of achieving adhesion between the reinforcing layer and the plastics body of the trim. It is for this reason that an intermediate layer bondable to both the reinforcing layer and the surface layer is used.

For a better understanding of the invention and to show how the same can be carried into effect reference will now be made by way of example only to the accompanying drawings in which:

FIGURE 1 is a transverse cross-section through a roof drip trim embodying this invention fitted over a channelled member of a roof of a vehicle body;

FIGURE 2 is a transverse cross-section through an alternative form of roof drip trim;

FIGURE 3 is a transverse cross-section through a further form of roof drip trim;

FIGURE 4 is a transverse cross-section through a motor vehicle boot embodying this invention which is shown fitted on a boot defining panel;

FIGURE 5 is a transverse cross-section through a window trim embodying this invention which is mounted in spaced relationship with respect to one end of a window glass and to a vehicle body panel, and

FIGURE 6 is a transverse cross-section through another form of window trim embodying this invention which is shown connected to one end of a window glass.

Referring to the drawings in which like reference numerals denote like parts, a trim embodying the present invention comprises a reinforcing layer 11 made of a ferrous metal-based leaf, a lustrous transparent or translucent thermoplastic plastics surface layer 12, and a thermoplastic plastics intermediate layer 13 which adheres to the plastics material of the surface layer 12. The reinforcing layer 11 and the surface layer 12 are rigidly interconnected by means of the intermediate layer 13.

The trim is generally of C-shaped profile with the reinforcing layer 11 being located on the inner surface of the trim to impart to and maintain in its intended shape the trim; the reinforcing layer, as its name suggests, increases the rigidity of the trim. The reinforcing layer 11 is made of ferrous metal-based plate or leaf with a high rigidity, specifically stainless steel.

The surface layer 12 is a visible decorative layer and made of a transparent or translucent thermoplastic plastics material which has a lustrous appearance and which will generally be a material having high surface hardness, a high workability and a good weatherproof quality. A plastics material suitable for this purpose may be a cellulosic plastics material, for example cellulose acetate, cellulose acetate butyrate, cellulose propionate or cellulose acetate propionate; an acrylic plastics material, for example a homopolymer or copolymer of methylmethacrylate, or polyvinyl chloride, polyethylene terephthalate, polybutylene terephthalate, polycarbonate, or an ionomer.

These plastics materials are generally characteristically transparent or translucent and accordingly any one of them can be used for the surface layer of the trim. In order to increase the decorative effect, it is also possible to incorporate pigments and/or other additives in the plastics materials, so that the plastics material becomes translucent or opaque. Furthermore, when a plastics material of one of the aforementioned types is coloured, the lustrous character is generally enhanced.

The intermediate layer 13 is located between the reinforcing layer 11 and the surface layer 12 to connect the two layers. The intermediate layer 13 is therefore made of a thermoplastic plastics material which can be firmly bonded to the surface layer by means of an adhesive. Likewise, the intermediate layer 13 is made of a thermoplastic plastics material which can also be adhesively bonded to the stainless steel leaf or plate forming the reinforcing layer 11. Furthermore, the material of the intermediate layer will be rigid to impart the required rigidity to the trim strip for it to be used as a decorative trim for an automobile. Finally the material of the intermediate layer preferably has a high heat resistance.

The intermediate layer 13 is usually coloured to match the colour of the body panel on which the trim is to be mounted, thereby to increase the decorative and aesthetic character of the trim, especially in view of the transparent or translucent character of the surface layer 12.

As mentioned above, the material of the intermediate layer 13 will depend *inter alia* on the material of the surface layer 12. Typically, when the surface layer 12 is made from polyvinyl chloride, the intermediate layer 13 is preferably made of ABS (acrylonitrile-butadiene-styrene copolymer). With a combination of polyvinyl chloride and ABS, these two materials can be adhered to each other by means of an adhesive. The intermediate layer 13 of ABS can be easily and fixedly connected to the reinforcing layer 11 by means of an adhesive, for example a thermosetting acrylic adhesive. ABS has a high rigidity and a good heat-resistance, i.e. an ability to withstand the thermosetting temperature of such an adhesive, and accordingly is particularly suitable for use in the production of intermediate layers of various kinds of decorative trims such as illustrated in the drawings.

Materials other than ABS, from which the intermediate layer 13 can be made include the following thermoplastic plastics materials: AES (acrylonitrile - ethylenepropylenediene rubber-styrene); AAS (acrylonitrile - acrylic rubber-styrene); ACS (acrylonitrile - chlorinated polyethylene - styrene); MBS (methacrylic - butadiene - styrene); polycarbonate; polyphenyleneoxide; polyphenylene-sulphide; and, polyamide. These plastics materials will generally be selected in relation to the plastics material from which the surface layer is made.

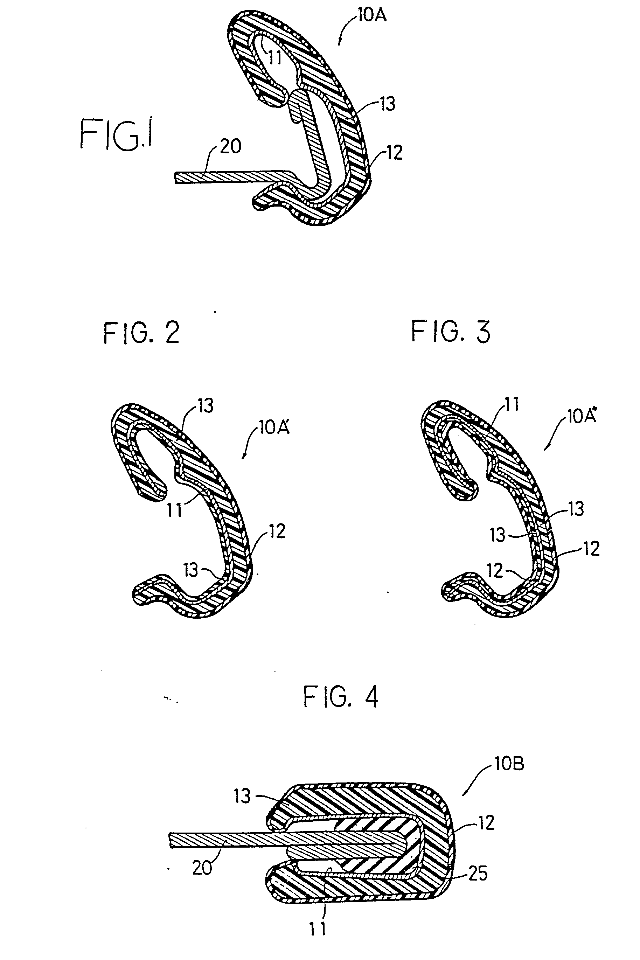

The combination of the reinforcing layer 11 and the surface layer 12 through the intermediate layer 13 is illustrated in Figures 1—3 which show three different constructions of trim. In Figure 1, trim 10A includes three layers consisting of the surface layer 12, the intermediate layer 13 and the reinforcing layer 11, which are disposed on one another in this order. In trim 10A' shown in Figure 2, the reinforcing layer 11 is embedded in the intermediate layer 13 which is coated with the visible surface layer 12. In trim 10A'' shown in Figure 3, the intermediate layer 13 in which the reinforcing layer 11 is embedded is completely enveloped by the surface layer 12. Thus, in Figure 3, the intermediate layer 13 is also covered at its rear side by the surface layer 12. In Figures 2 and 3, the reinforcing layer 11 is preferably located near the rear or inner surface of the trim so that when the trim is fitted, for example, to a panel 20 of a vehicle body (not shown) as shown in Figure 1, a large connecting or fitting force can be applied.

Generally speaking, stainless steel leaf or plate, of which the reinforcing layer 11 is made, cannot be easily bonded to transparent or translucent plastics materials and particularly to cellulosic plastics materials, of which the surface layer 12 is made. However, transparent or translucent plastics materials have the advantage of highly colour-toned brightness and attractive lustre, and, accordingly, nevertheless transparent or translucent plastics materials should be used to make the surface layer of the decorative trim. It is because of this difficulty sometimes encountered in bonding some transparent or translucent plastics materials to the reinforcing layer 11 that one of the features of decorative trims embodying the present invention resides in the provision of the intermediate layer 13 which makes it possible reliably to connect the surface layer 12 and the reinforcing layer 11. The intermediate layer is made of a plastics material which can be selected from a relatively wide range of materials. The intermediate layer 13 has a thickness sufficient to ensure the rigidity of the trim. Furthermore, the thickness of the intermediate layer 13 should determine the thickness of the trim, since an increase in the thickness of the intermediate layer 13 increases the thickness of the trim.

It is possible to provide a coloured intermediate layer 13 to which a transparent surface layer 12 is applied in order to increase the decorative effect of the trim which will now result from a combination of the colour of the intermediate layer and the transparent character of the surface layer 12.

In addition to the above-described forms of decorative trim embodying this invention, other forms of decorative trim embodying this invention which are particularly suitable for use as a plastic trim for an automobile and which possess a good decorative effect and a high rigidity are shown in Figures 4 to 6 of the accompanying drawings.

In trim 10B illustrated in Figure 4, the trim is connected to a panel 20 by means of resilience of the trim edges and adhesive 25 bonding the panel 20 to the reinforcing layer 11 at a position within the C-profile of the trim.

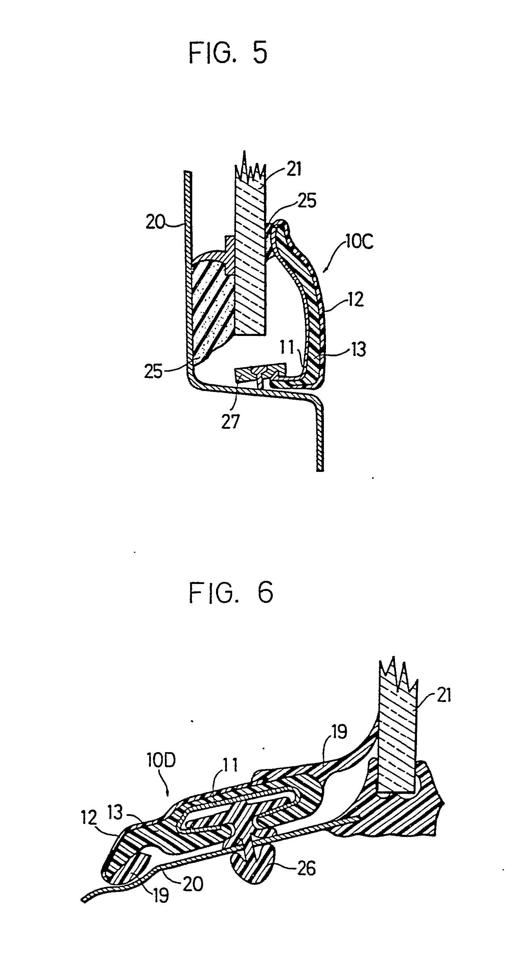

In Figure 5 trim 10C which is attached to a panel 20 by a clip 27 covers a peripheral edge of a window glass 21 which is bonded to the panel 20 by adhesive 25.

Finally referring to Figure 6, a protective layer 19 which is made, for example of soft polyvinyl chloride, is shaped and positioned so as to prevent the trim from coming into direct contact with the panel 20 and the window glass 21 and to prevent foreign substances, such as dust, from entering the gap between the window glass and the trim. The protective layer 19 also contributes to the prevention of displacement of the trim and to prevention of the occurrence of rattling noise which otherwise could occur. The trim 10D is connected to the panel 20 by means of a clip 26 anchored therein.

## Claims

1. A trim strip (10A) of channel form of the type comprising an outer surface layer (12) formed of an inherently transparent or translucent thermoplastic plastics material having a surface lustre, a reinforcing layer (11) of stainless steel plate or leaf at or adjacent the interior surface of the channel and an intermediate plastics layer (13) adhering to both the surface layer and the reinforcing layer, characterised in that the intermediate layer (13) is formed of a rigid thermoplastic plastics material and is adhesively bonded to both the outer surface layer (12) and the reinforcing layer (11) at all positions where the respective layers are positioned one over an adjacent layer to produce a rigid interconnection between the reinforcing layer and the outer surface layer.

2. A trim strip according to claim 1, wherein the surface layer (12) is formed of a cellulosic plastics material.

3. A trim strip according to claim 1, wherein the surface layer (12) is formed of cellulose acetate, cellulose acetate butyrate, cellulose propionate or cellulose acetate propionate.

4. A trim strip according to claim 1, wherein the surface layer (12) is formed of an acrylic plastics material.

5. A trim strip according to claim 4, wherein the surface layer (12) is formed of a homopolymer or copolymer of methyl methacrylate.

6. A trim strip according to claim 1, wherein the surface layer (12) is formed of a plastics material selected from polyvinyl chloride, polyethylene terephthalate, polybutylene terephthalate, polycarbonate or an ionomer.

7. A trim strip according to any one of the preceding claims, wherein the intermediate layer (13) is formed of acrylonitrile-butadiene styrene copolymer.

8. A trim strip according to any one of the preceding claims, wherein the adhesive bonding is achieved by means of a thermosetting acrylic adhesive, the intermediate layer being formed of a plastics material possessing thermal resistance sufficient for it to withstand the thermosetting temperature of the adhesive.

9. A trim strip according to any one of the preceding claims which is installed in a vehicle body as a roof drip trim, a boot trim or a window trim.

## Revendications

1. Bande de garniture (10A) en forme de gorge du gentre comprenant une couche superficielle externe (12) formée d'une matière plastique thermoplastique naturellement transparente ou translucide ayant un brillant de surface, une couche renforçante (11) formée par une feuille ou une plaque en acier inoxydable sur ou adjacente à la surface interne de la gorge et une couche plastique intermédiaire (13) adhérant à la fois à la couche superficielle et à la couche renforçante, caractérisée, en ce que la couche intermédiaire (13) est formée d'une matière plastique thermoplastique rigide et est assemblée par adhésion à la fois à la couche superficielle externe (12) et à la couche renforçante (11) dans toutes les positions où les couches respectives sont disposées l'une sur une couche adjacente pour former une interconnexion rigide entre la couche renforçante et la couche superficielle externe.

2. Bande de garniture selon la revendication 1 dans laquelle la couche superficielle (12) est formée d'une matière plastique cellulosique.

3. Bande de garniture selon la revendication 2, dans laquelle la couche superficielle (12) est formée d'acétate de cellulose, acétobutyrate de cellulose, propionate de cellulose ou acétopropionate de cellulose.

4. Bande de garniture selon la revendication 1, dans laquelle la couche superficielle (12) est formée d'une matière plastique acrylique.

5. Bande de garniture selon la revendication 4, dans laquelle la couche superficielle (12) est formée d'un homopolymère ou d'un copolymère de méthacrylate de méthyle.

6. Bande de garniture selon la revendication 1, dans laquelle la couche superficielle (12) est formée d'une matière plastique choisie parmi le chlorure de polyvinyle, polyéthylène téréphtalate, polybutylène téréphtalate, ou un ionomère.

7. Bande de garniture selon l'une quelconque des revendications précédentes, dans laquelle la couche intermédiaire (13) est formée de copolymère acrylonitrile - butadiène - styrène.

8. Bande de garniture selon l'une quelconque des revendications précédentes, dans laquelle le mode de liaison adhésif est obtenu au moyen d'un adhésif thermodurcissable acrylique, la couche intermédiaire étant formée d'une matière plastique possédant une résistance thermique suffisante pour pouvoir supporter la température de thermodurcissement de l'adhésif.

9. Bande de garniture selon une quelconque des revendications précédentes qui est disposée sur une carrosserie de véhicule comme garniture de gouttière de toit, garniture de coffre ou garniture de fenêtre.

**Patentansprüche**

1. Ein Dekorationsstreifen (10 A) in gefalzter Form von der Art, die eine äußere Oberflächenschicht (12) aus einem von Natur aus transparenten oder durchscheinenden thermoplastischen Kunststoffmaterial, eine verstärkende Schicht (11) aus einer Stahlplatte oder Folie sowie eine zwischenliegende, sowohl an der Oberflächenschicht als auch an der Verstärkerschicht anhaftende Plastikschicht (13) umfaßt, dadurch gekennzeichnet, daß die Zwischenschicht (13) aus einem festen thermoplastischen Material gebildet ist und diese mittels eines Klebers sowohl mit der äußeren Oberflächenschicht (12) als auch mit der Verstärkerschicht (11) an allen Stellen verbunden ist, wo die betreffenden Schichten sich miteinander berühren und so eine feste Zwischenbindung aus der Verstärkerschicht und der äußeren Oberflächenschicht bilden.

2. Ein Dekorationsstreifen gemäß Patentanspruch 1, wobei die Oberflächenschicht (12) aus einem plastischen Cellulosematerial gebildet ist.

3. Ein Dekorationsstreifen gemäß Patentanspruch 2, wobei die Oberflächenschicht (12) aus Celluloseacetat, Celluloseacetobutyrat, Cellulosepropionat oder Celluloseacetopropionat gebildet ist.

4. Ein Dekorationsstreifen gemäß Patentanspruch 1, wobei die Oberflächenschicht (12) aus plastischem Acrylatmaterial gebildet ist.

5. Ein Dekorationsstreifen nach Patentanspruch 4, wobei die Oberflächenschicht (12) aus einem Homo- oder Copolymeren des Methylmethacrylats gebildet ist.

6. Ein Dekorationsstreifen gemäß Patentanspruch 1, wobei die Oberflächenschicht (12) aus Polyvinylchlorid, Polyethylenterephthalat, Polybutylenterephthalat, Polycarbonat oder einem Ionomeren gebildet ist.

7. Ein Dekorationsstreifen nach einem der vorhergehenden Patentansprüche, wobei die Zwischenschicht (13) aus einem Acrylnitril- Butadien- Styrol- Copolymer gebildet ist.

8. Ein Dekorationsstreifen nach einem der vorhergehenden Patentansprüche, wobei die klebende Bindung erreicht wird durch einen wärmehärtenden Acrylkleber und die Zwischenschicht aus einem Plastikmaterial gebildet ist, das eine hinreichende Wärmefestigkeit besitzt, um der Härtetemperatur des Klebers zu widerstehen.

9. Ein Dekorationsstreifen nach einem der vorhergehenden Patentansprüche, welcher angebracht ist an einem Fahrzeugrumpf als Dachablaufdekoration, als Abstreifer oder als Fensterzierstreifen.

FIG.1

FIG. 2

FIG. 3

FIG. 4

FIG. 5

FIG. 6